# EUROPEAN PATENT SPECIFICATION

(11) **EP 2 184 829 B1**
(45) Date of publication and mention of the grant of the patent: **07.01.2015**
(21) Application number: 09013959.3
(22) Date of filing: 06.11.2009
(51) Int. Cl.: H02H 5/00, F16K 17/36, F16K 31/06, F17D 5/08, E03B 7/07

(54) **Automatic lightning protection valve for water supply system and method of providing lightning protection**
Automatisches Blitzschutzventil für Wasserversorgungssysteme und Verfahren zur Bereitstellung von Blitzschutz
Clapet de protection d'éclairage automatique pour système d'alimentation en eau et procédé pour fournir une protection d'éclairage

(30) Priority: 08.11.2008 SA 29071108; 17.04.2009 US 425470
(43) Date of publication of application: 12.05.2010
(73) Proprietor: King Abdulaziz City for Science and Technology, 11442 Riyadh (SA)
(72) Inventor: Khonkar, Hussameldin I., Riyadh 11442 (SA)
(74) Representative: Goddar, Heinz J.

(56) References cited:
- US-A- 6 061 216
- US-A1- 2007 095 400

## Description

### FIELD OF TECHNOLOGY

This disclosure relates generally to a method of providing lightning protection and to an automatic lightning protection valve for a water supply system.

### BACKGROUND

A structure may include a lightning protection system to protect the structure from lightning bolts. A lightning protection system may include a rooftop network of conductors, multiple conductive paths from the roof to the ground, bonding connections to metallic objects within the structure and a grounding network. However, the structure may also include a water supply line to deliver water to the interior of the building. Water is a conductor of electricity. Therefore, if a lightning bolt hits the water supply line, the lightning bolt may bypass the other components of the lightning protection system and enter the internal water distribution system of the structure, even if the water supply line and water pipes within the structure as such are grounded. Someone inside the structure may be electrocuted. Electronics inside the structure may be damaged.

In US 2007/095400 A1, an apparatus for lightning protection of a structure is disclosed, comprising a sensor device configured to sense a high current which may result from lightning, a control device configured to receive a first signal from said sensor device, and an actuator configured to receive a second signal from the control device and further configured to control a fluid flow into said structure.

US 6,061,216 discloses a device that connects to electrical or electronic equipment that is to be protected from lightning. The device detects amplitude modulation radio frequency signals (electrostatic energy) emitted from an electrical storm, lightning, by a detector (2) which sends energy to signal a trigger relay (4) to activate an interval timer (6) and one of four alternate relay systems to disconnect the device and the equipment sought to be protected from a power source, antenna or other equipment. The device then provides power from a battery (16), thereby isolating the equipment sought to be protected from lightning damage for a predetermined interval of time. When the threat of lightenng damage has past, the device automatically reconnects and restores the device and the electrical or electronic equipment to the original power source.

### SUMMARY

The present invention relates to an apparatus for lightning protection of a structure, comprising a sensor device configured to sense an electromagnetic field in the vicinity of the structure and to generate a corresponding first signal; a control device configured to receive said first signal from said sensor device and further configured to generate a second signal depending on the first signal, wherein, if the value of the first signal exceeds a first threshold value indicating an imminent lightning strike, the control device is configured to generate a corresponding second signal for stopping the fluid flow into said structure , and wherein, if the value of the first signal is below a second threshold value, the control device is configured to generate a corresponding second signal for allowing a fluid flow into said structure; an actuator configured to receive said second signal from said control device and further configured to stop or allow fluid flow into said structure depending on the second signal.

In a preferred embodiment, the sensor device comprises at least one electromagnetic sensor.

Preferably, said actuator comprises a solenoid valve.

The control circuit may further comprise an indicator configured to indicate that the first signal exceeds a first threshold value.

Preferably, the sensed electromagnetic field is an atmospheric electric field, such as an atmospheric electric field caused by a thunder storm.

Thus, by sensing an electromagnetic field, such as a thunderstorm, in the vicinity of the structure and controlling the actuator as described above, if is possible to protect human beings and electronics inside said structure from harm.

The present invention further relates to a method of providing lightning protection for a structure comprising the steps of measuring an atmospheric electromagnetic field in the vicinity of the structure; generating a first signal representing a measurement of the atmospheric electromagnetic field and a second signal representing a control signal depending on the first signal, wherein, if a value of the first signal exceeds a first threshold value indicating an imminent lightning strike, a corresponding second signal is generated which causes the fluid supply to the structure to be closed, and wherein, if a value of the first signal is below a second threshold value, a corresponding second signal is generated which causes the fluid supply to the structure to be open; and stopping or allowing a fluid flow into the structure depending on the second signal.

Preferably, measuring an atmospheric electromagnetic field comprises the measurement of at least one physical variable from the group comprising an electromagnetic variable, an acoustic variable, a pressure-related variable, and a temperature-related variable.

In a preferred embodiment, stopping or allowing a fluid flow into the structure depending on the second signal comprises controlling a valve configured to open or close a fluid supply to the structure. The method may further comprise the step of grounding the fluid supply to the structure. The method may further comprise the step of configuring a sensor circuit to measure the atmospheric electromagnetic field and to generate the first signal representing the measurement of the atmospheric electromagnetic field.

Finally, the present invention also relates to a system, comprising a structure; a fluid line to convey fluid to the structure; and an apparatus for lightning protection of said structure as described above.

An exemplary embodiment provides an apparatus of lightning protection. A sensor circuit of the apparatus receives an electromagnetic signal of an atmospheric electromagnetic field to generate a modified signal and to communicate the modified signal to a control circuit. A control circuit of the apparatus of the lightening circuit causes the valve to automatically close if the modified signal is greater than a specified value. The valve control device is communicatively coupled with the sensor circuit. The apparatus also includes a solenoid valve to stop the flow of a fluid into the structure by closing a fluid line.

The apparatus may comprise a resonance circuit of the sensor circuit to set the modified signal to a specified frequency value. Preferably, the resonance circuit comprises a capacitor communicatively coupled to at least two electric coil units. The specified frequency value may comprise 300kHz. The sensor circuit may comprise a radio antenna to receive the radio signal of the atmospheric electromagnetic field. The apparatus may further comprise a power source to supply power to the control circuit and the sensor circuit; and a power supply monitor to measure an electric potential energy value of the power source. The power source may preferably comprise a battery to supply a direct current to a power supply monitor circuit, and the power supply monitor circuit may comprise a light emitting diode. The apparatus preferably comprises a flasher circuit to visually indicate when the modified signal is greater than the specified value. The control circuit may comprise a first transistor to amplify the modified signal, a second transistor with a switch functionality to reduce a potential difference value of the modified signal to less than an other potential difference value of the modified signal at a capacitor communicatively coupled to the second transistor, and wherein the second transistor is communicatively coupled with the first transistor, a third transistor with a switch functionality, and wherein the third transistor is communicatively coupled with the second transistor, a fourth transistor and a light emitting device, and wherein the fourth transistor and the light emitting device are communicatively coupled with the third transistor, a rectifier circuit comprising at least one diode and at least one capacitor to transform an alternating current of the modified signal to a direct current, a variable resistance circuit comprising at least one other diode communicatively coupled with a voltage source, and wherein the variable resistance current diode impedes a positive voltage from being communicated to the fifth transistor if a positive voltage value is less than a voltage of the voltage source, and wherein the variable resistance circuit communicates a positive voltage to a fifth transistor, an operational amplifier to combine the modified signal and the voltage of the voltage source, and wherein the operational amplifier is communicatively coupled with the fifth transistor and a solenoid of the solenoid valve, a sixth transistor to function as a switch to render the modified signal to the solenoid if the value of the modified signal is at least one of equal to and greater than the voltage of the voltage source.

The apparatus may further comprise a ground coupled to the solenoid valve.

Likewise, a method of lightning protection comprises measuring an atmospheric electromagnetic field; generating a signal representing a measurement of the atmospheric electromagnetic field; and automatically shutting off a water supply line to a structure if the measurement of the atmospheric electromagnetic field is greater than a specified value. The method may further comprise causing a solenoid valve to obstruct an aperture of the water supply line if the measurement of the atmospheric electromagnetic field is greater than the specified value. The water supply line to the structure may flow through the aperture. The method preferably comprises grounding the water supply line. The valve may comprise a non-conducting material to insulate an internal water supply line of the structure from the electric charge of the lightning bolt in the external water supply line. The specified value the measurement of the atmospheric electromagnetic field could, for instance, indicate a substantial probability of an atmospheric discharge of electricity within a specified range from the structure. The method may further comprise configuring a sensor circuit comprising hardware devices to measure the atmospheric electromagnetic field and to generate the signal representing the measurement of the atmospheric electromagnetic field. The method preferably comprises causing the aperture to open if the measurement of the atmospheric electromagnetic field is less than the specified value.

An exemplary embodiment provides a method of lightning protection. An atmospheric electromagnetic field is measured. A signal representing a measurement of the atmospheric electromagnetic field is generated. A water supply line to a structure is automatically shut off if the measurement of the atmospheric electromagnetic field is greater than a specified value.

An exemplary embodiment provides a system of lightning protection. The system includes a structure and a waterline to convey water to the structure. The system also includes a solenoid valve to control the waterline at the boundary of the structure. An antenna of the lightning protection system receives an atmospheric electromagnetic signal. A signal processing circuit of the system processes the atmospheric electromagnetic signal and communicates a processed signal to solenoid valve.

The methods and systems disclosed herein may be implemented in any means for achieving various aspects, and may be executed in a form of a machine-readable medium embodying a set of instructions that, when executed by a machine, cause the machine to perform any of the operations disclosed herein. Other features will be apparent from the accompanying drawings and from the detailed description that follows.

### BRIEF DESCRIPTION OF THE DRAWINGS

Example embodiments are illustrated by way of example and not limitation in the figures of the accompanying drawings, in which like references indicate similar elements and in which:
**Figure 1** is a diagrammatic view illustrating a lightening protection system to a structure, according to one embodiment.
**Figure 2** is a systematic view illustrating correlation of solenoid valve with control circuit and sensor circuit, according to one embodiment.
**Figure 3** is a schematic view illustrating association of circuits in the lightning protection system, according to one embodiment.
**Figure 4** is a schematic view illustrating association of a sensor circuit, a control circuit, and a solenoid valve, according to one embodiment.
**Figure 5** is a process flow that illustrates a method of lighting protection to water supply system, according to another embodiment.

Other features of the present embodiments will be apparent from the accompanying drawings and from the detailed description that follows.

### DETAILED DESCRIPTION

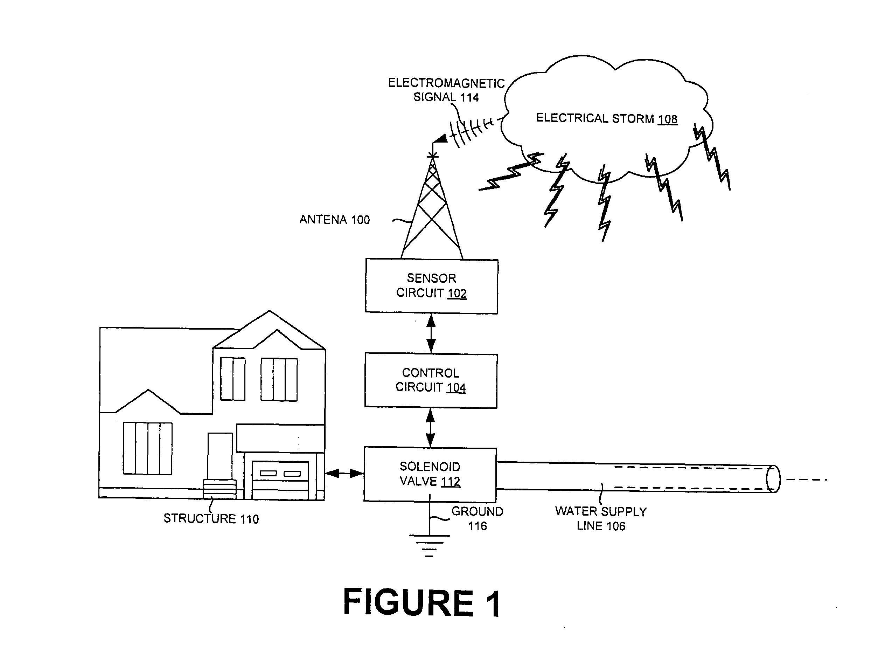

**Figure 1** is a diagrammatic view illustrating a lightening protection system for a structure, according to one embodiment. Particularly, **Figure 1** illustrates a sensor in the form of an electromagnetic antenna 100, a sensor circuit 102, a control circuit 104, a water supply line 106, an electrical storm 108, a structure 110, an actuator in the form of a solenoid valve 112, an electromagnetic signal 114, and a ground 116 according to one embodiment.

In an example embodiment the structure 110 is coupled to the water supply line 106. The solenoid valve 112 is coupled to the water supply line 106 and the control circuit 104. The solenoid valve 112 may be grounded. The control circuit 104 is coupled to the sensor circuit 102. The sensor circuit 102 is connected to the antenna 100. The antenna 100 may receive the electromagnetic signal 114 from the electrical storm 108.

The water supply line 106 may be an external source of water to the structure. The water supply line 106 may be vulnerable to a lightning strike. In another example, the water supply line 106 may include liquid and/or gaseous chemicals.

The sensor circuit 102 includes the antenna 100. The antenna includes a component designed to send and receive radio waves. In one embodiment, the antenna includes an aerial antenna. In another embodiment, the antenna 100 includes an array of antennas communicatively coupled with each other. The antenna 100 may include a transducer designed to transmit and/or receive electromagnetic waves. The sensor circuit 102 converts electromagnetic waves received by the antenna into a modified signal (first signal) and/or vice versa. The sensor circuit 102 communicates the modified signal to the control circuit 104.

The control circuit 104 includes an interconnection of electrical elements including resistors, inductors, capacitors, transmission lines, voltage sources, current sources, and switches. The control circuit 104 shares a solenoid of the solenoid valve 112. The control circuit 104 may further communicate the modified signal as a second signal to the solenoid. Preferably, however, the control circuit 104 transforms the modified signal into a second signal. For example, the control circuit 104 may filter the modified signal. The control circuit 104 may also strengthen the modified signal.

The solenoid valve 112 includes an electromechanical valve for use with a liquid and/or gas. The solenoid valve 112 is controlled by running and/or stopping an electric current through a solenoid, in order to change the state of the valve. The solenoid valve 112 converts electrical energy into mechanical energy which, in turn, opens or closes the valve mechanically.

For example, the sensor circuit 102 receives an electromagnetic signal 114 of a specified value indicating an imminent lightning strike from the electrical storm 108. The sensor circuit 102 generates the modified signal (first signal) from the electromagnetic signal 114. The sensor circuit 102 communicates the modified signal to the control circuit 104. The control circuit 104 further processes the modified signal (i.e. first signal) into a value (i.e. second signal) capable of activating the solenoid valve 112. The solenoid valve 112 then terminates the flow of water through the water supply line 106. A current of a lightning strike to the water supply line 106 is then conveyed to the ground 116.

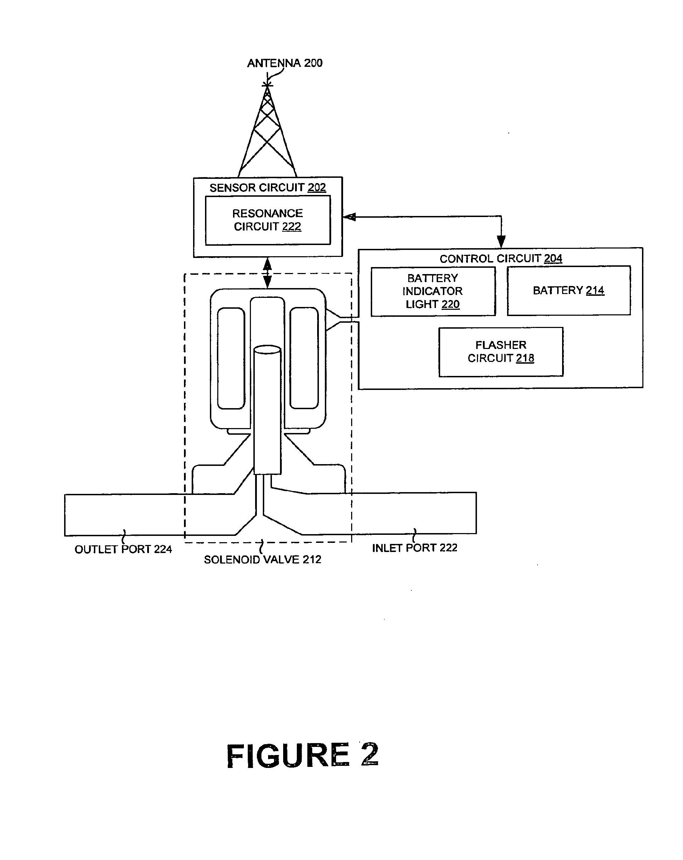

**Figure 2** is a systematic view illustrating correlation of an actuator, such as a solenoid valve with control circuit and sensor circuit, according to one embodiment. Particularly, **Figure 2** illustrates an aerial antenna 200, a sensor circuit 202, a control circuit 204, a battery 214, a solenoid valve 212, a flasher circuit 218, a battery indicator light 220, a resonance circuit 222, an outlet port 224 and an inlet port 222, according to one embodiment.

The solenoid valve 212 includes the inlet port 222 and the outlet port 224. The solenoid valve 212 is coupled with the control circuit 204 and the sensor circuit 202. The control circuit 204 includes the battery 214, the battery indicator light 220, and the flasher circuit 218. The sensor circuit 202 includes a resonance circuit 222. The control circuit 204 communicates to the sensor circuit 202. The sensor circuit 202 is connected to the antenna 100.

The battery 214 includes a device that converts chemical energy to electrical energy. The battery 214 supplies the electrical energy to the control circuit 204. The battery indicator light 220 indicates that the battery 214 has fallen below a specified amount of chemical energy.

The resonance circuit 222 of the sensor circuit adjusts the modified signal, i.e. first singal, to a specified frequency value, i.e. second signal. In one embodiment, the specified value may be a frequency value of 300kHz. The resonance circuit may include a capacitor communicatively coupled to at least two electric coil units.

The inlet port 222 transports a dielectric fluid and/or gas (e.g. water) from an external supply line to the solenoid valve 212. The outlet port 224 of the solenoid valve transports the dielectric fluid and/or gas to the structure 100.

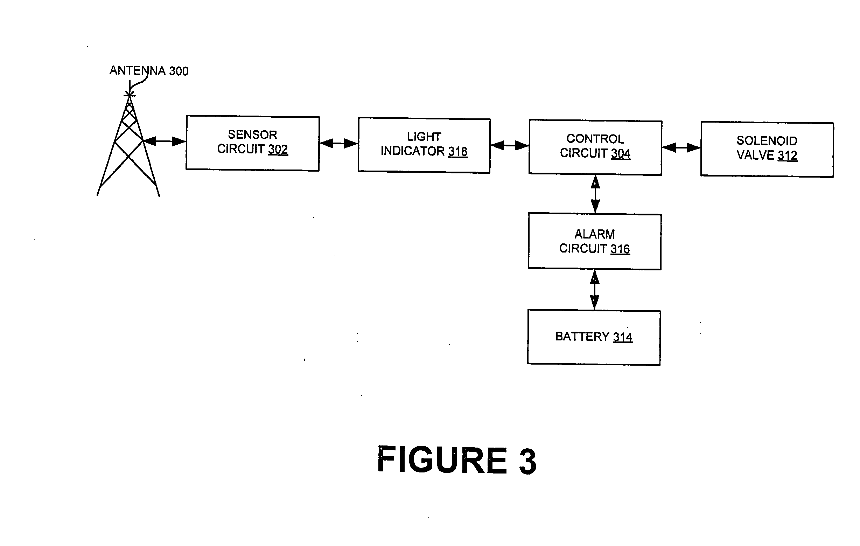

**Figure 3** is a schematic view illustrating the arrangement of circuits in the lightning protection system, according to one embodiment. Particularly, **Figure 3** illustrates an antenna 300, a sensor circuit 302, a control circuit 304, a solenoid valve 312, a battery 314, a light indicator 318, and an alarm circuit 316, according to one embodiment.

The antenna 300 is connected to the sensor circuit 302. The sensor circuit 302 is coupled to the light indicator 318. The control circuit 304 communicates with the light indicator 318 and the solenoid valve 312. The control circuit 304 communicates with the alarm circuit 316. The alarm circuit 316 is coupled to the battery 314.

According to a particular embodiment, the antenna 310 receives an atmospheric electromagnetic signal. The sensor circuit 302 and the control circuit are included in a signal processing circuit. The signal processing circuit processes the atmospheric electromagnetic signal and communicates a processed signal to a solenoid of the solenoid valve 312. The alarm circuit 316 may indicate that the sensor circuit 302 has received an electromagnetic signal greater than the specified value. The alarm circuit 316 may indicate a specified probability that a lightning bolt may be produced by an electric storm 108. The solenoid valve 312 controls the waterline at the boundary of the structure. The solenoid valve 312 may block the flow of water in the waterline depending on the received processed signal. The solenoid valve 312 may thus creates an opening in the path of the water with a functional infinite resistance to a current produced by a lighting strike on the waterline.

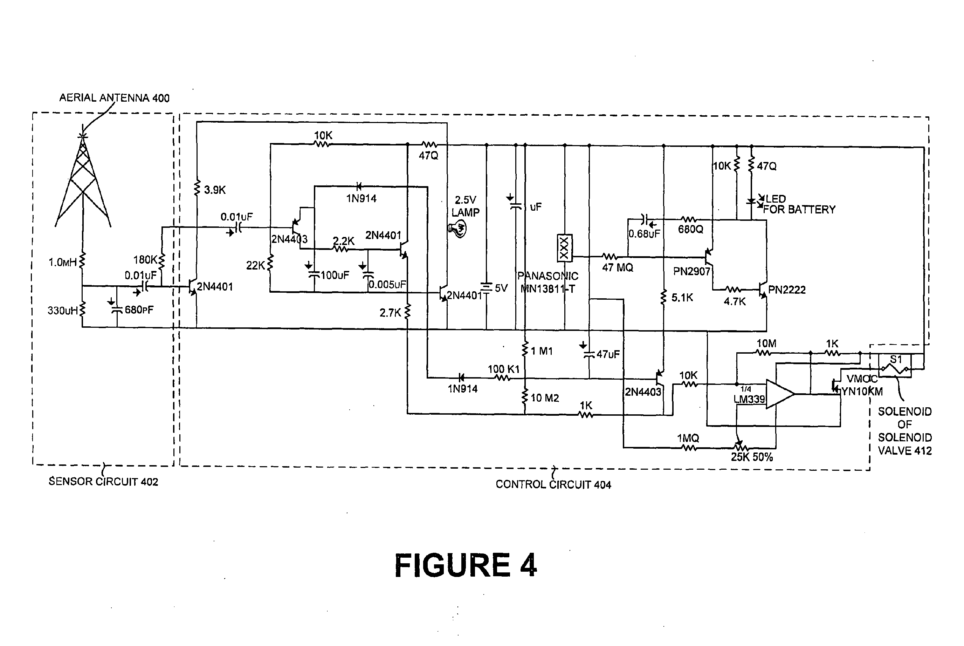

**Figure 4** is a schematic view illustrating the arrangement of a sensor circuit, a control circuit, and a solenoid valve, according to one embodiment. Particularly, **Figure 4** illustrates an antenna 400, sensor circuit 402, a control circuit 404, and a solenoid of solenoid valve 412, according to one embodiment.

In an example embodiment the antenna is connected to the sensor circuit 402. The sensor circuit 402 is coupled to the control circuit 404. The control circuit is coupled to the solenoid of solenoid valve 412.

The antenna 400 includes a transducer designed to transmit and/or receive electromagnetic waves. The control circuit 404 includes a power source to supply power to the control circuit and the sensor circuit. The control circuit 404 includes a power supply monitor to measure an electric potential energy value of the power source. The power source includes a battery. The power supply monitor includes a light emitting diode. The control circuit 404 includes a flasher circuit with another light emitting diode to indicate if the sensor circuit 402 has detected an electromagnetic wave above a specified threshold. The control circuit 404 includes a first transistor to amplify the modified signal. The control circuit 404 includes a second transistor with a switch functionality to reduce a potential difference value of the modified signal to less than another potential difference value of the modified signal at a capacitor communicatively coupled to the second transistor. The second transistor is communicatively coupled with the first transistor. The control circuit 404 includes a third transistor with a switch functionality. The third transistor may be communicatively coupled with the second transistor. The control circuit 404 includes a fourth transistor and a light emitting device, and wherein the fourth transistor and the light emitting device are communicatively coupled with the third transistor. The control circuit 404 includes a rectifier circuit, comprising at least one diode and at least one capacitor to transform an alternating current of the modified signal to a direct current. The control circuit 404 includes a variable resistance circuit comprising at least one other diode communicatively coupled with a voltage source, and wherein the variable resistance current diode impedes a positive voltage from being communicated to the fifth transistor if a positive voltage value is less than a voltage of the voltage source. The variable resistance circuit communicates a positive voltage to the fifth transistor. The control circuit 404 includes an operational amplifier to combine the modified signal and the voltage of the voltage source. The operational amplifier is communicatively coupled with the fifth transistor and a solenoid of the solenoid valve. The control circuit 404 includes a sixth transistor to function as a switch and to render the modified signal to the solenoid if the value of the modified signal is at least one of equal to and greater than the voltage of the voltage source.

The control circuit 404 may also include a second flasher circuit composed of two transistors (in case the potential difference is less than 4.7 V). The modified signal may be received by an LED to indicate that the energy coming from the battery is about to come to an end.

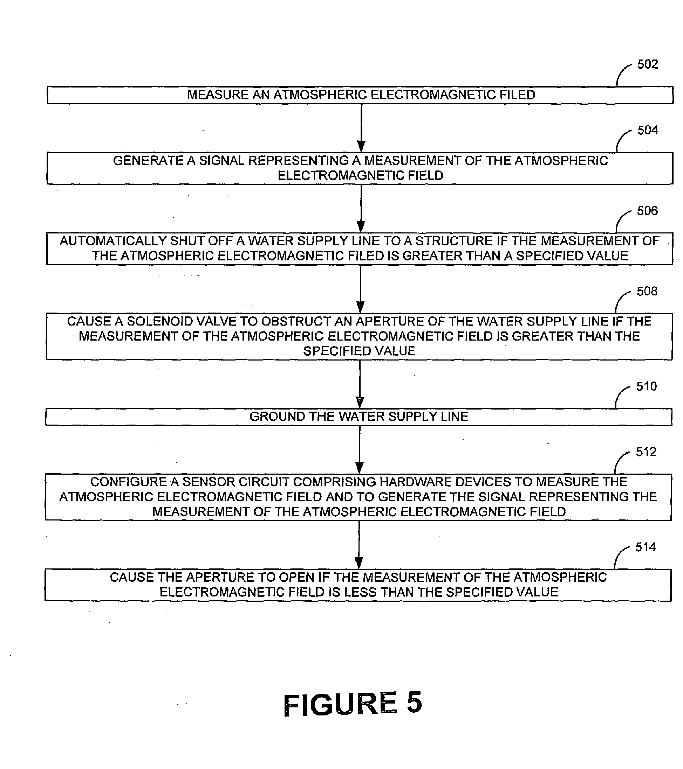

**Figure 5** is a process flow that illustrates a method of providing lighting protection for a water supply system, according to another embodiment. In step 502, an atmospheric electromagnetic field is measured. In step 504, a signal, i.e. a first signal, representing a measurement of the atmospheric electromagnetic field is generated. In operation 506, a water supply line 106 to a structure 110 is automatically shut off if the measurement of the atmospheric electromagnetic field represented by the first signal is greater than a specified value. For example the specified value may be 300 kHz. In step 508, a solenoid valve 112 is caused to obstruct an aperture of the water supply line 106 if the measurement of the atmospheric electromagnetic field is greater than the specified value thereby the fluid supply to said structure. The water supply line to the structure 110 may flow through the aperture.

In step 510, the water supply line 106 is grounded. The valve may include a non conducting material to insulate an internal water supply line of the structure 110 from the electric charge of the lightning bolt in the external water supply line. The specified value of the measurement of the atmospheric electromagnetic field may indicate a substantial probability of an atmospheric discharge of electricity within a specified range from the structure 110.

In step 512, a sensor circuit 202 including hardware devices is configured to measure the atmospheric electromagnetic field and to generate the signal representing the measurement of the atmospheric electromagnetic field. In step 514, the aperture is caused to open if the measurement of the atmospheric electromagnetic field is less than the specified value. For example, a valve control device may open the solenoid valve 112 if the processed signal indicates the atmospheric electromagnetic signal is less than the specified value.

Although the present embodiments have been described with reference to specific embodiments, it will be evident that various modifications and changes may be made to these embodiments without departing from the scope of the various embodiments. For example, the various devices, modules, analyzers, generators, etc. described herein may be enabled and operated using hardware circuitry, firmware, software or any combination of hardware, firmware, or software embodied in a machine readable medium. For example, the various electrical structures and methods may be embodied using transistors, logic gates, application specific integrated (ASIC) circuitry or Digital Signal Processor (DSP) circuitry.

In addition, it will be appreciated that the various operations, processes, and methods disclosed herein may be embodied in a machine-readable medium or a machine accessible medium compatible with a data processing system, and may be performed in any order. Accordingly, the Specification and Drawings are to be regarded in an illustrative rather than a restrictive sense.

## Claims

1. An apparatus for lightning protection of a structure, comprising:
a sensor device (102; 202; 302; 402) configured to sense an electromagnetic field (108) in the vicinity of the structure (110) and to generate a corresponding first signal;
a control device (104 204; 304; 404) configured to receive said first signal from said sensor device (102; 202; 302; 402) and further configured to generate a second signal depending on the first signal, wherein, if the value of the first signal exceeds a first threshold value indicating an imminent lightning strike, the control device (104; 204; 304; 404) is configured to generate a corresponding second signal for stopping the fluid flow into said structure (110), and wherein, if the value of the first signal is below a second threshold value, the control device (104; 204; 304; 404) is configured to generate a corresponding second signal for allowing a fluid flow into said structure (110);
an actuator (112; 212; 312; 412) configured to receive said second signal from said control device (104; 204; 304; 404) and further configured to stop or allow fluid flow into said structure (110) depending on the second signal.

2. Apparatus according to claim 1, wherein the sensor device (102; 202; 302; 402) comprises at least one electromagnetic sensor (100; 200; 300; 400).

3. Apparatus according to one of the preceding claims, wherein said actuator (112; 212; 312; 412) comprises a solenoid valve.

4. Apparatus according to one of the preceding claims, wherein the control circuit (204; 304; 404) further comprises an indicator (218; 318) configured to indicate that the first signal exceeds a first threshold value.

5. Apparatus according to one of the preceding claims, wherein the sensed electromagnetic field is an atmospheric electric field, such as an atmospheric electric field caused by a thunder storm.

6. A method of providing lightning protection for a structure comprising the steps of:
measuring (502) an atmospheric electromagnetic field in the vicinity of the structure;
generating (504) a first signal representing a measurement of the atmospheric electromagnetic field and a second signal representing a control signal depending on the first signal, wherein, if a value of the first signal exceeds a first threshold value indicating an imminent lightning strike, a corresponding second signal is generated which causes the fluid supply to the structure to be closed, and wherein, if a value of the first signal is below a second threshold value, a corresponding second signal is generated which causes the fluid supply to the structure to be open; and
stopping or allowing a fluid flow into the structure depending on the second signal.

7. Method according to claim 6, wherein measuring (502) an atmospheric electromagnetic field comprises the measurement of at least one an electromagnetic variable.

8. Method according to one of claims 6 or 7, wherein stopping or allowing a fluid flow in to the structure depending on the second signal comprises controlling a valve configured to open or close a fluid supply to the structure.

9. The method according to claim 8 further comprising the step of grounding (510) the fluid supply to the structure.

10. The method according to one of claims 6 to 9 further comprising the step of configuring (512) a sensor circuit to measure the atmospheric electromagnetic field and to generate the first signal representing the measurement of the atmospheric electromagnetic field.

11. A system, comprising:
a structure (110);
a fluid line (106) to convey fluid to the structure (110); and
an apparatus for lightning protection of said structure (110) according to one of claims 1 to 5.

## Patentansprüche

1. Vorrichtung zum Schutz eines Gebäudes vor Blitzen, umfassend:
eine Sensoreinrichtung (102; 202; 302; 402) zum Messen eines elektromagnetischen Felds (108) in der Nähe des Gebäudes (110) und zum Erzeugen eines korrespondierenden ersten Signals;
eine Steuereinrichtung (104, 204; 304; 404) zum Empfangen des ersten Signals von der Sensoreinrichtung (102; 202; 302; 402) und ferner zum Erzeugen eines von dem ersten Signal abhängigen zweiten Signals, wobei, wenn der Wert des ersten Signals einen ersten Schwellenwert überschreitet, der auf einen bevorstehenden Blitzeinschlag hinweist, die Steuereinrichtung (104, 204; 304; 404) konfiguriert ist, um ein korrespondierendes zweites Signal zum Stoppen des Strömens von Fluid in das Gebäude (110) zu erzeugen, und wobei, wenn der Wert des ersten Signals unterhalb eines zweiten Schwellenwerts liegt, die Steuereinrichtung (104, 204; 304; 404) konfiguriert ist, um ein korrespondierendes zweites Signal zum Zulassen des Strömens eines Fluids in das Gebäude (110) zu erzeugen;
einen Aktuator (112; 212; 312; 412), der zum Empfangen des zweiten Signals von der Steuereinrichtung (104, 204; 304; 404) konfiguriert ist und ferner konfiguriert ist, um das Strömen von Fluid in das Gebäude (110) in Abhängigkeit von dem zweiten Signal zu stoppen oder zuzulassen.

2. Vorrichtung nach Anspruch 1, wobei die Sensoreinrichtung (102; 202; 302; 402) mindestens einen elektromagnetischen Sensor (100; 200; 300, 400) umfasst.

3. Vorrichtung nach einem der vorangehenden Ansprüche, wobei der Aktuator (112; 212; 312; 412) ein Magnetventil umfasst.

4. Vorrichtung nach einem der vorangehenden Ansprüche, wobei die Steuereinrichtung (204; 304; 404) ferner eine Anzeigeeinrichtung (218; 318) umfasst, die konfiguriert ist, um anzuzeigen, dass das erste Signal einen ersten Schwellenwert überschreitet.

5. Vorrichtung nach einem der vorangehenden Ansprüche, wobei das gemessene elektromagnetische Feld ein atmosphärisches elektrisches Feld, wie zum Beispiel ein durch ein Gewitter verursachtes atmosphärisches elektrisches Feld, ist.

6. Verfahren zur Bereitstellung von Blitzschutz für ein Gebäude, umfassend die Schritte:
Messen (502) eines atmosphärischen elektromagnetischen Felds in der Nähe des Gebäudes;
Erzeugen (504) eines ersten Signals, das einen Messwert des atmosphärischen elektromagnetischen Felds repräsentiert, und eines zweiten Signals, das ein von dem ersten Signal abhängiges Steuersignal repräsentiert, wobei, wenn ein Wert des ersten Signals einen ersten Schwellenwert überschreitet, der auf einen bevorstehenden Blitzeinschlag hinweist, ein korrespondierendes zweites Signal erzeugt wird, das bewirkt, dass die Fluidzufuhr zum Gebäude abgesperrt wird, und wobei, wenn ein Wert des ersten Signals unterhalb eines zweiten Schwellenwerts liegt, ein korrespondierendes zweites Signal erzeugt wird, das bewirkt, dass die Fluidzufuhr zum Gebäude geöffnet wird; und
Stoppen oder Zulassen einer Strömung von Fluid in das Gebäude in Abhängigkeit von dem zweiten Signal.

7. Verfahren nach Anspruch 6, wobei das Messen (502) eines atmosphärischen elektromagnetischen Felds das Messen von mindestens einer elektromagnetischen Variablen umfasst.

8. Verfahren nach einem der Ansprüche 6 oder 7, wobei das Stoppen oder Zulassen einer Strömung von Fluid in das Gebäude in Abhängigkeit von dem zweiten Signal ein Steuern eines Ventils umfasst, das konfiguriert ist, um eine Fluidzufuhr zum Gebäude zu öffnen oder abzusperren.

9. Verfahren nach Anspruch 8, ferner umfassend den Schritt des Erdens (510) der Fluidzufuhr zum Gebäude.

10. Verfahren nach einem der Ansprüche 6 bis 9, ferner umfassend den Schritt des Konfigurierens (512) einer Sensorschaltung zum Messen des atmosphärischen elektromagnetischen Felds und zum Erzeugen des ersten Signals, das den Messwert für das atmosphärische elektromagnetische Feld repräsentiert.

11. System, umfassend:
ein Gebäude (110);
eine Fluidleitung (106) zum Fördern von Fluid zum Gebäude (110); und
eine Vorrichtung zum Schutz eines Gebäudes (110) vor Blitzen gemäß einem der Ansprüche 1 bis 5.

## Revendications

1. Appareil pour la protection contre la foudre d'une structure, comprenant :
un capteur (102 ; 202 ; 302 ; 402) configuré pour capter un champ électromagnétique (108) à proximité de la structure (110) et pour générer un premier signal correspondant ;
un dispositif de commande (104 ; 204 ; 304 ; 404) configuré pour recevoir ledit premier signal en provenance dudit capteur (102 ; 202 ; 302 ; 402) et en outre configuré pour générer un second signal dépendant du premier signal, où, si la valeur du premier signal dépasse une première valeur de seuil indiquant un coup de foudre imminent, le dispositif de commande (104 ; 204 ; 304 ; 404) est configuré pour générer un second signal correspondant pour arrêter l'écoulement de fluide dans ladite structure (110), et où, si la valeur du premier signal est au-dessous d'une seconde valeur de seuil, le dispositif de commande (104 ; 204 ; 304 ; 404) est configuré pour générer un second signal correspondant pour permettre un écoulement de fluide dans ladite structure (110) ;
un actionneur (112 ; 212 ; 312 ; 412) configuré pour recevoir ledit second signal en provenance dudit dispositif de commande (104 ; 204 ; 304 ; 404) et en outre configuré pour arrêter ou permettre l'écoulement de fluide dans ladite structure (110) en fonction du second signal.

2. Appareil selon la revendication 1, dans lequel le capteur (102 ; 202 ; 302 ; 402) comprend au moins un capteur électromagnétique (100 ; 200 ; 300 ; 400).

3. Appareil selon l'une des revendications précédentes, dans lequel ledit actionneur (112 ; 212 ; 312 ; 412) comprend une électrovanne.

4. Appareil selon l'une des revendications précédentes, dans lequel le circuit de commande (204 ; 304 ; 404) comprend en outre un indicateur (218 ; 318) configuré pour indiquer que le premier signal dépasse une première valeur de seuil.

5. Appareil selon l'une des revendications précédentes, dans lequel le champ électromagnétique capté est un champ électrique atmosphérique, comme un champ électrique atmosphérique provoqué par un orage.

6. Procédé de fourniture de protection contre la foudre pour une structure, comprenant les étapes consistant à :
mesurer (502) un champ électromagnétique atmosphérique à proximité de la structure ;
générer (504) un premier signal représentant une mesure du champ électromagnétique atmosphérique et un second signal représentant un signal de commande dépendant du premier signal, où, si une valeur du premier signal dépasse une première valeur de seuil indiquant un coup de foudre imminent, un second signal correspondant est généré qui provoque la fermeture de l'alimentation en fluide de la structure, et où, si une valeur du premier signal est au-dessous d'une seconde valeur de seuil, un second signal correspondant est généré qui provoque l'ouverture de l'alimentation en fluide de la structure ; et
arrêter ou permettre un écoulement de fluide dans la structure en fonction du second signal.

7. Procédé selon la revendication 6, dans lequel la mesure (502) d'un champ électromagnétique atmosphérique comprend la mesure d'au moins une variable électromagnétique.

8. Procédé selon l'une des revendications 6 ou 7, dans lequel le fait d'arrêter ou de permettre un écoulement de fluide dans la structure en fonction du second signal comprend la commande d'une vanne configurée pour ouvrir ou fermer une alimentation en fluide de la structure.

9. Procédé selon la revendication 8, comprenant en outre l'étape de mise à la terre (510) de l'alimentation en fluide de la structure.

10. Procédé selon l'une des revendications 6 à 9, comprenant en outre l'étape consistant à configurer (512) un circuit de capteur pour mesurer le champ électromagnétique atmosphérique et pour générer le premier signal représentant la mesure du champ électromagnétique atmosphérique.

11. Système, comprenant :
une structure (110) ;
une conduite de fluide (106) pour transporter le fluide jusqu'à la structure (110) ; et
un appareil pour la protection contre la foudre de ladite structure (110) selon l'une des revendications 1 à 5.
